# EUROPEAN PATENT APPLICATION

(11) **EP 3 037 907 A1**
(43) Date of publication of application: **29.06.2016**
(21) Application number: 14307158.7
(22) Date of filing: 23.12.2014
(51) Int. Cl.: G05D 1/00

(54) **Autonomously assisted and guided vehicle**

(71) Applicant: Université Sciences Technologies Lille, 59655 Villeneuve d'Ascq Cedex (FR); CENTRE NATIONAL DE LA RECHERCHE SCIENTIFIQUE -CNRS-, 75016 Paris (FR)
(72) Inventor: Merzouki, Rochdi, 59650 VILLENEUVE D'ASCQ (FR); Coelen, Vincent, 59110 LA MADELEINE (FR); Conrard, Blaise, 59510 FOREST SUR MARQUE (FR); Pollart, Michel, 59262 SAINGHIN-EN-MELANTOIS (FR)
(74) Representative: Cabinet Plasseraud

(57) **Abstract**

The present invention concerns an intelligent system (100) for autonomously and securely assisting and guiding a motorized vehicle (10) along a predetermined path (Pa) from a starting point (Dep) to an ending point (Arr) within a determined area (Z), said system (100) including: a) said vehicle (10) comprising a plurality of motorized directional wheels (11) and a wheel control module (12) comprises a processor (12a) associated with a memory (12b) storing guiding instructions for controlling the traction and the direction of said wheels (11) so that the vehicle (10) follows said predetermined path (Pa),b) a remote cockpit (20) comprising electronics means (21) suitable for remotely guiding said vehicle (10), wherein said vehicle (10) comprises a sensing module (14) comprising a GPS suitable for receiving a first GPS signal (s1_GPS) containing coordinates (xl, yl) of the position (P1) of said vehicle (10) and for providing said coordinates (xl, yl) to said wheel control module (12), wherein the processor (12a) is also configured to continuously compare the received coordinates (xl, yl) with said predetermined path (Pa) and, if said coordinates (xl, yl) are not in compliance with the predetermined path (Pa), to transmit said coordinates (xl, yl) to the cockpit (20) via the communication modules (13, 23) so as to remotely guide said vehicle (10) using the electronic means (21) of the cockpit (20).

## Description

### Technical field

The object of the present invention relates to the field of traffic management and space optimisation inside a predetermined area (such as confined area), and more particularly the traffic management of containers inside a port or a maritime terminal.

More particularly still, the present invention relates to an intelligent system for the autonomous assistance and/or the autonomous guidance of a motorized vehicle from a starting point to an ending point within a predetermined area.

The object of the present invention has particularly advantageous applications in confined spaces such as ports or maritime terminals.

Other advantageous applications can be expected in confined spaces like warehouses, hangars, in airports or all other confined spaces where autonomous vehicle can operate.

### Technical background

The maritime trade, and more specifically container transportation, has been considerably and continuously growing during the last decades. This is mainly due to the globalization and the development of emerging countries.

This growth has a direct influence over the development of ports and maritime terminals.

Unfortunately, most of the small and medium-size ports and maritime terminals cannot follow the rhythm imposed by the maritime trade growth.

The main development problems faced by ports and maritime terminals depend on the internal traffic management and the space optimisation inside their confined spaces.

One of the first approaches that has been installed in some major ports such as in Rotterdam, Dusseldorf and Hamburg is to automate the handling of goods and containers using Automatic Guided Vehicles, also called AGV.

The AGV can be implemented as a road-train system that follows guided static lines.

This approach has resolved some of the internal traffic issues: the AGV are quite efficient when the infrastructure of the port and its ground are adapted to AGV.

Nevertheless, after years of use, this approach shows several limitations, notably when such AGV technology has been transferred to other ports with small and medium sizes.

Indeed, the constant growth of the maritime trade makes the internal traffic increasingly saturated in ports and maritime terminals.

Furthermore, the integration of AGV in ports and maritime terminals is not really flexible as the entire infrastructure of the port needs to be adapted to use such AGV.

It is also necessary to invest in the infrastructure in terms of sensor-based guided lines, ground cover, etc.

Once the infrastructure is installed, it becomes difficult to modify it.

Such infrastructure is not adaptive: it is thus difficult to fulfil all the requirements in terms of spaces when the ports and maritime terminals require a bigger surface for the operation areas.

Furthermore, investing on new port infrastructure or a terrain extension can have a significant cost to the port authority.

In addition, the AGV are generally heavy vehicles with internal combustion engines.

As a result, according to the traffic density, it is difficult to maintain a high air-quality during the routing operations.

This increases the levels of pollution inside confined areas.

Furthermore, failure management of such a transport system is not taken into account with such approach.

Indeed, with a single engine and a unidirectional mobility of the AGV, it is difficult to avoid situations when a faulty or stopped vehicle causes a blockage to the system.

For example, when a vehicle is in a failure state, it will block the path of all subsequent vehicles. This is costly expensive and totally inappropriate within the context of a port and a maritime terminal.

Moreover, this can also provoke damage to the vehicles and, in more critical situations can cause high maintenance costs and time delays to be incurred

Another approach is to use vehicles that have the ability to be autonomously operated.

According to this approach, the data of a Global Positioning System (GPS), odometer, range-finder and the actuator-monitoring system mounted on the vehicles are transmitted to a cockpit, also called control room.

Then, these data are introduced to a behavioral model of the vehicle and displayed with the use of a CAD model of the vehicle in a screen as a real-time animation motion (see notably documents US 8,190,295 and US 8,301,318).

Such approach thus proposes a vehicle also called Intelligent Autonomous Vehicle (IAV) that consists on a robotized vehicle, which can be adapted to its surrounding environment.

Such vehicle can be operated autonomously on the basis of its global and relative positioning. This approach is easy to implement for freight and person transports, inside confined spaces of small and medium sizes of ports and maritime terminals and other private circulation areas.

This approach is quite accurate in healthy situations, i.e., when the dynamic system in operation has not been affected by some unexpected events or malfunctions. Indeed, such autonomous vehicles can operate whether the system is under healthy or degraded conditions.

However, such approach is generally not well suited to confined spaces such as ports and maritime terminals with a lot of traffic: all of these vehicles can be seen as obstacles for the IAV.

### Object and Summary of the present invention

The invention aims to improve the situation described above by addressing at least some of the disadvantageous mentioned above.

One of the aims of the present invention is to improve the traffic management and the space optimisation inside a confined space by developing a clean, safe and intelligent transportation system.

For this purpose, a first aspect of the present invention provides an autonomous system for autonomously assisting and guiding a vehicle along a predetermined path from a starting point to an ending point within a predetermined area.

According to the present invention, the system includes said vehicle and a remote cockpit.

Advantageously, the vehicle according to the present invention comprises:
- a plurality of motorized directional wheels, and
- a wheel control module comprising a processor associated with a memory storing guiding instructions for controlling the traction and the direction of the wheels so that the vehicle follows said predetermined path.

Advantageously, the remote cockpit can comprise electronics means for remotely guiding said vehicle.

In an exemplary embodiment, said vehicle and said cockpit further comprise respectively first and second wireless communication modules suitable for exchanging information to each other.

Advantageously, said vehicle can further comprises a sensing module comprising a first positioning sensor (such as for example a GPS sensor) suitable for receiving, in real time, a first GPS signal.

Preferably, said first GPS signal contains coordinates of the position of said vehicle within the area.

The first positioning sensor is configured for providing said coordinates to said wheel control module.

Advantageously, the processor of said wheel control module can be configured to continuously compare the received coordinates with said predetermined path.

In an exemplary embodiment, if said coordinates are not in compliance with the predetermined path, the processor of said wheel control module is configured to transmit said coordinates to the cockpit via the communication modules so as to remotely guide said vehicle using the electronics means of the cockpit.

Such arrangement of characteristics within the present invention contributes in designing a new concept of IAV that is also called Autonomously Assisted and Guided Vehicle (A2GV).

According to the present invention, such intelligent system permits, in a normal situation, to guide the vehicle autonomously from a starting point to an ending point within a determined area and, in case for example of a default in the GPS coordinates regarding the predetermined path or in case of a loss of data, to switch to a manual mode in which an operator can remotely guide the vehicle using the electronic means of the cockpit.

Thus, the traffic in confined spaces with such autonomous vehicles becomes efficient and the navigation is well optimized.

Such an intelligent and autonomous vehicle is thus designed with a focus on ensuring the performance of corrections of all of the desired operations and to be reliable, available, and safe.

Such an intelligent and autonomous vehicle is a new type of automatic guided vehicle that can estimate its own location and autonomously guide itself along a route on an electronic map without the use of external equipment, and also to adapt more quickly and flexibly to layout changes.

Furthermore, in an exemplary embodiment, in case of a loss of said first GPS signal during a period equal or superior to a predetermined threshold period (for example 5 seconds), the processor of said wheel control module is configured to generate and transmit to said cockpit via the communication modules an alert signal so as to remotely guide said vehicle using the electronics means of the cockpit.

In another exemplary embodiment, said vehicle further comprises an accelerometer. In this embodiment, in case of a loss of said first GPS signal during a period inferior to a predetermined threshold period, the processor of said wheel control module estimates the position of said vehicle within the area by calculating its coordinates on the basis of the previously received coordinates, the velocity of the vehicle provided by the accelerometer and the predetermined path.

Advantageously, said cockpit further comprises a simulation environment module suitable for displaying on a digital screen a virtual representation of said area and for processing said coordinates so as to display said vehicle at the correct position within said virtual area.

Optionally, said cockpit further comprises a driving module including a steering wheel and a pedals platform suitable for cooperating with the electronics means so as to enable an operator to control the movements and the speed of said vehicle.

Advantageously, the simulation environment module further comprises a processing means for storing a dynamics model of said vehicle so as to reproduce the dynamic behaviour of said vehicle within the virtual area.

Preferably, the driving module further comprises a haptic interface suitable for providing feedback force through said steering wheel and said pedals platform in compliance with the dynamics model of the vehicle.

This enhances the experience of the operator when he has to pilot the vehicle.

In an exemplary embodiment, the sensing module further comprises at least one laser suitable for detecting and tracking a dynamic or static obstacle in the vicinity of the vehicle.

In case of such a detection, said at least one laser is suitable for generating and transmitting a detection signal to the wheel control module.

Then, the processor of said wheel control module is also configured to calculate, on the basis of such detection signal, new guiding instructions for a new path so as to avoid the detected obstacle and to reach the ending point.

Advantageously, the system also comprises an Unmanned Aerial Vehicle (UAV) such as a drone.

Such UAV includes:
- a camera associated with image data processing means to detect said vehicle,
- a gyroscope suitable for determining the angular position of said UAV regarding the vehicle,
- an altimeter to determine the height of the UAV regarding the ground surface of the area, and
- a second positioning sensor such as a GPS suitable for receiving in real-time a second GPS signal containing coordinates of the position of said UAV regarding the ground surface of the area.

According to the present invention, said UAV comprises a calculator that is configured to estimate the coordinates of the position of the vehicle on the basis of said angular position, said height, and said second GPS signal, and to generate an UAV signal containing said estimated coordinates.

Preferably, the UAV further comprises radio communication means configured to continuously transmit said UAV signal to the first wireless communication modules of the A2GV vehicle.

Preferably, the processor of the wheel control module is configured to continuously compare the estimated coordinates contained in said UAV signal with the coordinates contained in the first GPS signal.

In an exemplary embodiment, if said coordinates are different from the estimated coordinates, the processor of the wheel control module is configured to transmit to the cockpit via the communication modules the order to remotely guide said vehicle using the electronics means of the cockpit.

In another embodiment, in case of a loss of said first GPS signal during a period equal or superior to a predetermined threshold period, the processor of the wheel control module is configured to take into account the estimated coordinates provided by the UAV for the assistance or guidance of the vehicle.

A second aspect of the present invention relates to the use of a system as described above for guiding a motorized vehicle along a predetermined path from a starting point to an end point within a confined space inside a port or in a maritime terminal.

The present invention is adaptable to the port environment.

No investment on the terrain is needed to exploit a system according to the present invention.

All the intelligence is embedded on the vehicle.

The terminology of intelligence is related to the numerous autonomous tasks that the vehicle can realize using the embedded sensors.

### Brief description of the figures

The accompanying figures, which are included to provide a further understanding of the invention and are incorporated in and constitute a part of this specification, illustrate exemplary embodiments of the invention, and together with the description serve to explain the principles of the invention:
- Figure 1 illustrates an intelligent system for autonomously and securely guiding a motorized vehicle 10 according a first exemplary embodiment of the present invention.
- Figure 2 illustrates an intelligent system for autonomously and securely guiding a motorized vehicle 10 comprising an UAV according a second exemplary embodiment of the present invention.
- Figure 3a and 3b illustrate two embodiments in which the system assists and guides the motorized vehicle along a predetermined path from a starting point to an ending point within a determined area,

### Detailed description

The invention is described more fully hereinafter with reference to the accompanying figures, in which exemplary embodiments of the invention are shown.

This invention may, however, be embodied in many different forms and should not be construed as limited to the embodiments set forth herein.

Rather, these exemplary embodiments are provided so that this disclosure is thorough, and will fully convey the scope of the invention to those skilled in the art.

As discussed above, the present invention aims to provide an integrated concept of a technological innovation allowing ports to improve their logistic operations, whilst taking account of the environment and safety considerations.

In the example described here, the technological challenge consists of proposing a safe, clean and efficient transport system 100 which can easily be adapted to the existing port infrastructure, using different piloting modes:
- an autonomous mode in which a vehicle 10 is autonomous and follows a predetermined path Pa from a starting point Dep to an ending point Arr,
- a remote control mode in which the vehicle 10 is remotely and manually piloted by an operator from a cockpit 20.

More particularly, in the example described here, the present invention relates to a robotic vehicle 10 for autonomous or remote operation.

Despite its dimensions (13.5 m length, 3 m width and 1.5 m height in the example), such autonomous robotic vehicle 10 can fulfill accurately and safely the human guidance capabilities.

In the example described here, said vehicle 10 comprises a platform 15 able to support a container of 10 tons and of 20, 40 or 45 feet.

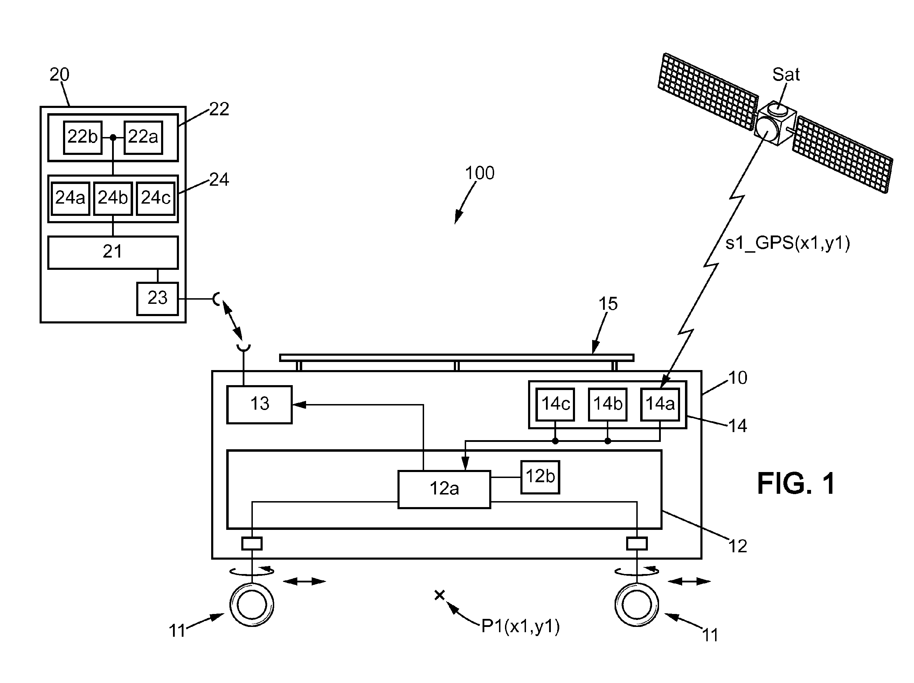

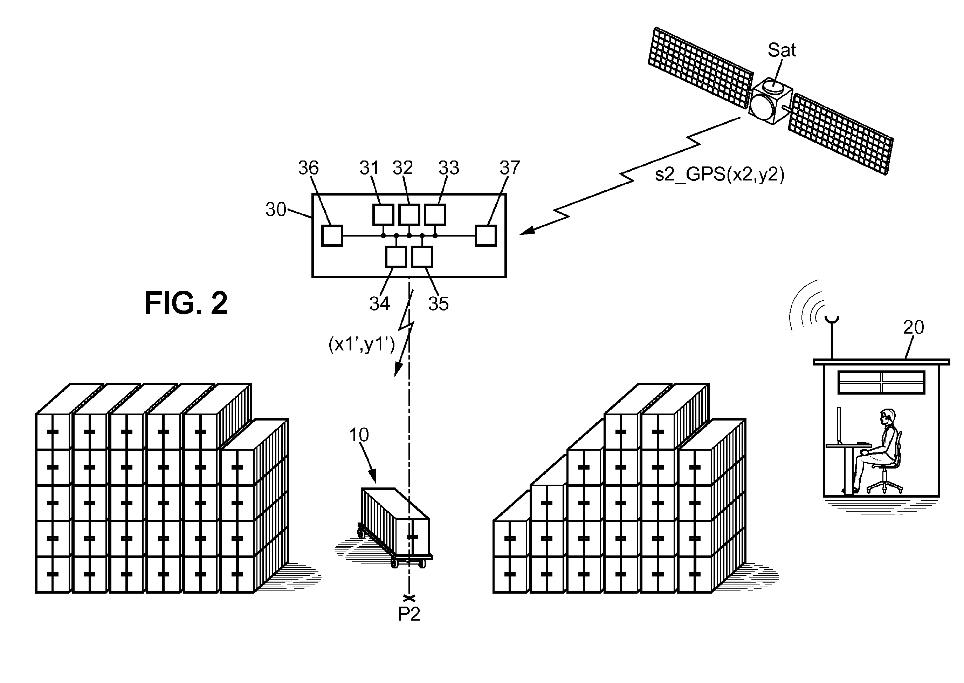

In the example described here and as illustrated in figure 1 or 2, such a vehicle 10 has a plurality of motorized directional wheels 11 and a wheel control module 12.

It contains eight full-electrical and decentralized actuators: four for traction and four for steering. Each controlled wheel is omnidirectional, which can be controlled in traction and can turn around its vertical axis in 360°. With such configuration, it is possible to have an omni-drive mobility of the vehicle.

Dependent on its load weight, said vehicle 10 can have autonomy of 4 hours with a maximum speed of 25km/h. The heavy vehicle is used to transport freight with 10 tons load weight, inside confined spaces with limited speed.

In the example described here, the wheel control module 12 comprises a processor 12a associated with a memory 12b for storing guiding instructions for autonomously controlling said actuators for the traction and the direction of the wheels 11.

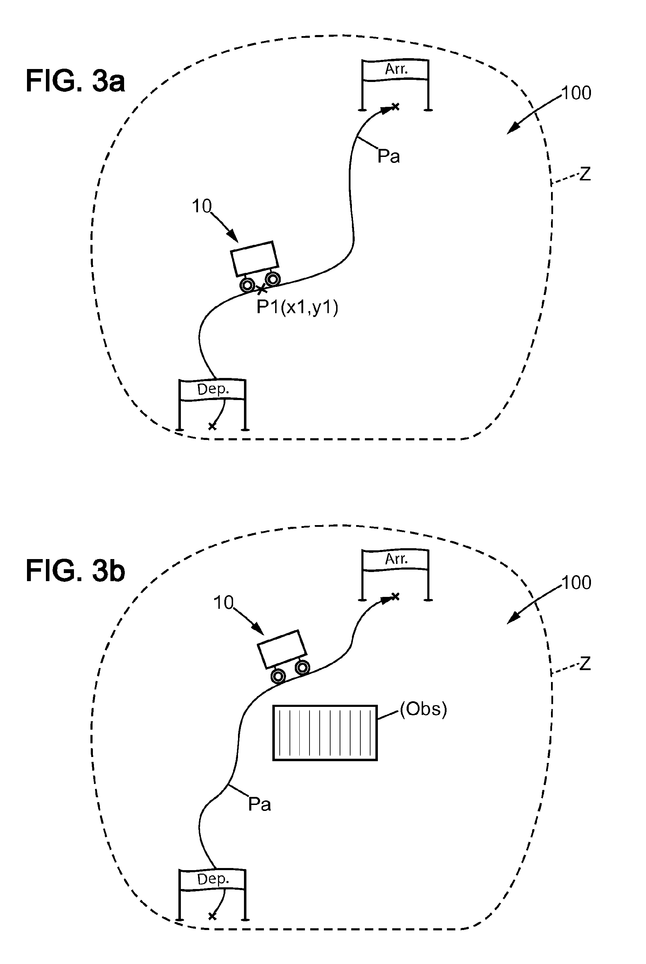

Said guiding instructions are configured so that the vehicle 10 follows the path Pa from a starting point Dep to an ending point Arr (see figure 3a).

Said guiding instructions allow the vehicle 10 to navigate in complex environment in safe conditions, after considering an on-line evaluation of the actuator and sensor status.

The vehicle 10 also comprises a sensor module 14.

In the example described here, said sensor module 14 comprises notably a GPS 14a and cameras to evaluate the evolution of its environment (current location, traffics, fixed obstacles, etc.).

The autonomous navigation of the vehicle 10 along the path Pa is managed by the processor 12a using notably the guiding instructions, the GPS signal s1_GPS provided by said GPS 14a coupled with a SLAM algorithm (Simultaneous Localization And Mapping).

The sensor module 14 also comprises lasers 14b that are positioned at the four sides of the vehicle 10 chassis.

In the example described here, these lasers 14b are used to track targets at centimetre scale and to detect static or dynamic obstacles Obs surrounding the vehicle 10.

If one or more of the lasers 14b detects such obstacles such as illustrated in figure 3b, the sensor module 14 generates and transmits a detection signal to the wheel control module 12.

Then, in this case, the processor 12a of said wheel control module 12 calculates new guiding instructions for a new path Pa' so as to overcome the detected obstacle Obs and to reach the ending point Arr.

In addition, the sensor module 14 comprises an accelerometer 14c to measure the longitudinal and lateral accelerations of the vehicle 10 at its gravity centre, including yaw, roll and pitch velocities.

The bumper of the vehicle 10 also includes sensors to detect any physical contact with the vehicle 10.

The sensor module 14 also comprises position encoders placed on each wheel 11 used by the odometer to estimate the mean speed of the centre of mass of the vehicle.

Thus, said sensor module 14 comprises:
- macroscopic sensors such as GPS 14a or 14b that are directly related to the positioning of the robotic vehicle 10 in its environment,
- microscopic sensors such as encoders, current and voltage measurements needed to monitor the health status for each actuator in real-time using residual generations based on behavioral models of the robotic vehicle 10.

The vehicle 10 is also equipped with a first wireless communication module 13 that serves as a means to exchange information with a second wireless communication module 23 of the remote cockpit 20.

In the exemplary embodiment described here, when one or more actuators or sensors are in a fault state, the processor 12a is configured to process an automatic reconfiguration of the guiding instructions to maintain the automatic piloting of the vehicle 10 in order to avoid any blocking situation.

At any time, an operator can remotely control the vehicle 10 using the electronics means 21 of the cockpit.

These electronic means 21 are connected to a driving module 24 that includes a steering wheel 24a and pedals platform 24b suitable for cooperating with said electronics means 21 so as to control the movements and the speed of said vehicle 10.

Such driving means 24 permit the robotic vehicle 10 to be piloted as a conventional vehicle, but from a remote cockpit 20.

Said cockpit contains a simulation environment module 22.

Thus, the operator can follow the operation and the healthy status of the vehicle 10 on a screen 22a displaying the vehicle 10 in its virtual environment.

The simulation environment module 22 uses all the information provided by the vehicle 10: the real time operation process uses the GPS 14a, the laser 14b, and all the other microscopic measurements provided by the sensor module 14.

For example, the GPS signal provided by the vehicle 10 enables to position and orient the vehicle accurately in the simulation environment.

All these data are fed into the chip 22b containing the dynamics model of the vehicle so as to reproduce and display the dynamic behavior of said vehicle 10 within the virtual area.

The driving module 24 also comprises a haptic interface 24c to provide the feedback force in compliance with the dynamics model of the vehicle 10.

For instance, under manual operation, if a fault is presented in a direction motor, a different feedback force is received while turning the steering wheel 24a.

Furthermore, if an abnormality is detected in by the traction and direction motors dynamic model for microscopic sensors, the fault information is fed into the dynamic model 22b in order to simulate the effects of the fault in the overall vehicle.

This provides a more precise display of the robotic vehicle dynamics than an animation using only the GPS coordinate.

Indeed, the effects of the fault may only be seen in the GPS coordinate in extreme cases.

This enables the operator to actually see how the vehicle reacts to the fault and allowing him to make a decision between keeping the vehicle under an autonomous mode or to pass to manual operation or to stop the vehicle.

In addition, an alarm indicating a fault in the robotic vehicle is also presented in the screen 22a.

The cockpit 20 thus consists in a real-time simulation platform designed to reconstruct the three-dimensional mapping of the port.

This platform is very helpful. It allows visualisation in real-time of the dynamic behaviour of the vehicle 10 in a virtual environment. When the simulation is performed, the commands are transmitted to the vehicle.

At this stage, the real-time simulation platform can supervise all the operations from distance.

If any incident appears, then the operator can, from a distance, take control of the A2GVat any moment.

As mentioned above, the system 100 provides an automatic navigation of the vehicle 10 in a port environment.

The system 100 provides a true improvement in the guidance and the navigation of the vehicles when operating in maritime port terminals with or without receiving a GPS signal.

As mentioned above, the GPS 14a continuously receives from a satellite Sat a first GPS signal s1_GPS that contains the geographical coordinates (x1, y1) of the position P1 of the vehicle 10 within the area Z.

These coordinates (x1, y1) are immediately transmitted to the processor 12a of said wheel control module 12.

In this example, the processor 12a is configured to continuously compare the received coordinates (x1, y1) with the predetermined path Pa stored in the memory 12b.

If said coordinates (x1, y1) are not in compliance with the predetermined path Pa, the processor 12a transmits the coordinates (x1, y1) to the cockpit 20 via the communication modules 13 and 23.

In other words, if the predetermined path Pa does not contain the coordinates (x1, y1), the processor 12a informs the operator to pass the vehicle 10 from an autonomous mode to a remote control mode.

Furthermore, the environment of ports and maritime terminals can often be perturbed by the loss of GPS signals.

This is mainly due to the presence of signal-devoid areas resulting from the concentration of containers or buildings/trees, which can be a source of signal loss or reflection.

Of course, the navigation of the vehicle is not fully dependent on the reception of GPS signals, since other embedded sensors such as lasers are also provided.

In some cases of loss of the first GPS signal s1_GPS, the processor can recalculate a trajectory or and a path by using adaptive reconfiguration algorithms.

Nevertheless, in the case of a loss of the first GPS signal s1_GPS during a period equal or superior to a predetermined threshold period equal for example to 5 seconds, the processor 12a of said wheel control module 12 is configured to generate and transmit to said cockpit 20 via the communication modules 13 and 23 an alert signal so as to remotely guide said vehicle 10 using the electronics means 21 of the cockpit.

Alternatively, and as illustrated in figure 2, the system further comprises an UAV 30 such as a drone.

Such UAV acts as an intelligent external sensor that is able to receive the GPS signal and to deduce the coordinates of the position of the vehicle.

More particularly, in this example, such UAV 30 includes:
- a camera 31 associated with image data processing means 32 to detect said vehicle 10,
- a gyroscope 33 that determines the angular position of said UAV 30 regarding the detected vehicle 10,
- an altimeter 34 that determines the height of the UAV 30 regarding the ground surface of the area Z, and
- a second GPS 35 that continuously receives in real time a second GPS signal s2_GPS containing coordinates (x2, y2) of the position P2 of said UAV 30 regarding the ground surface of the area Z.

In this example, the UAV 30 also comprises a calculator 36 that processes all these information to calculate an estimation of the coordinates (x1', y1') of the position of the vehicle 10.

This calculator 36 further generates an UAV signal containing said estimated coordinates (x1', y1').

In this example; radio communication means 37 configured to continuously transmit said UAV signal to the first wireless communication modules 13 of the vehicle 10.

In this example, the processor 12a of the wheel control module 12 receives said UAV signal and continuously compares the estimated coordinates (x1', y1') with the coordinates (x1, y1) provided in the first GPS signal (x1, y1) by the GPS 14a.

If said coordinates (x1, y1) and (x1', y1') are different from each other, it means that a fault or other problem has occurred. Then, the processor 12a transmits to the cockpit 20 the order to remotely guide said vehicle 10.

The estimation of the coordinates (x1', y1') can also serve in case of a loss of the first GPS signal s1_GPS during a period equal or superior to a predetermined threshold period (for example 5 seconds). In such case, the processor 12a can take into account the estimated coordinates (x1', y1') provided by the UAV 30 in the guidance of the vehicle 10.

Thus, the present invention provides a robust and safe solution to guide a vehicle within confined spaces of container terminals.

The present invention thus provides a solution to manage space sharing conflicts at the local level, when they appear, and to allow a quick regulation of the traffic without requiring the planning of the routes of all vehicles involved.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein.

Furthermore, an embodiment of the present invention may not include all of the features described above. Therefore, it is intended that the present invention not be limited to the particular embodiments disclosed, but that the invention include all embodiments falling within the scope of the invention as broadly defined above. In particular, the embodiments describe above could be combined.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

A person skilled in the art will readily appreciate that various parameters disclosed in the description may be modified and that various embodiments disclosed may be combined without departing from the scope of the invention. It is stipulated that the reference signs in the claims do not limit the scope of the claims, but are merely inserted to enhance the legibility of the claims.

## Claims

1. An intelligent system (100) for autonomously and securely guiding a motorized vehicle (10) along a predetermined path (Pa) from a starting point (Dep) to an ending point (Arr) within a determined area (Z), said system (100) including:
a) said vehicle (10) comprising a plurality of motorized directional wheels (11) and a wheel control module (12) comprises a processor (12a) associated with a memory (12b) storing guiding instructions for controlling the traction and the direction of said wheels (11) so that the vehicle (10) follows said predetermined path (Pa),
b) a remote cockpit (20) comprising electronics means (21) suitable for remotely guiding said vehicle (10),
said vehicle (10) and said cockpit (20) comprising respectively a first (13) and a second (23) wireless communication modules suitable for exchanging information with each other,
wherein said vehicle (10) comprises a sensing module (14) comprising a first positioning sensor (14a) suitable for receiving in real time a first GPS signal (s1_GPS) containing coordinates (x1, y1) of the position (P1) of said vehicle (10) within the area (Z) and for providing said coordinates (x1, y1) to said wheel control module (12),
wherein the processor (12a) of said wheel control module (12) is configured to continuously compare the received coordinates (x1, y1) with said predetermined path (Pa) and, if said coordinates (x1, y1) are not in compliance with the predetermined path (Pa), to transmit said received coordinates (x1, y1) to the remote cockpit (20) via the communication modules (13, 23) so as to remotely guide said vehicle (10) using the electronic means (21) of the cockpit (20).

2. The system (100) according to claim 1, wherein, in case of a loss of said first GPS signal (s1_GPS) during a period equal or superior to a predetermined threshold period, the processor (12a) of said wheel control module (12) is configured to generate and transmit to said cockpit (20) via the communication modules (13, 23) an alert signal so as to remotely guide said vehicle (10) using the electronics means (21) of the cockpit.

3. The system (100) according to claim 1 or 2, wherein said a sensing module (14) further comprises an accelerometer (14c), and wherein, in case of a loss of said first GPS signal (S1_GPS) during a period inferior to a predetermined threshold period, the processor (12a) of said wheel control module (12) estimates the position (P1) of said vehicle (10) within the area (Z) by calculating coordinates (x1, y1) on the basis of the previously received coordinates, a velocity of the vehicle (10) provided by the accelerometer (14c) and the predetermined path (Pa).

4. The system (100) according to any one of claims 1 to 3, wherein said cockpit (20) further comprises a simulation environment module (22) suitable for displaying on a digital screen (22a) a virtual representation of said area (Z) and for processing said coordinates (x1, y1) received from the vehicle (10) so as to display said vehicle (10) at the correct position (P1) within said virtual area.

5. The system (100) according to claim 4, wherein said cockpit (10) further comprises a driving module (24) including a steering wheel (24a) and pedals platform (24b) suitable for cooperating with said electronics means (21) so as to control the movements and the speed of said vehicle (10).

6. The system (100) according to claim 4 or 5, wherein the simulation environment module (22) further comprises a processing means (22b) suitable for storing a dynamics model (22b) of said vehicle (10) and for reproducing the dynamic behaviour of said vehicle (10) within the virtual area.

7. The system (100) according to claim 6 when dependent from claim 5, wherein the driving module (24) further comprises a haptic interface (24c) suitable for providing a feedback force through said steering wheel (24a) and said pedals platform (24b) in compliance with the dynamics model of the vehicle (10).

8. The system (100) according to any one of claims 1 to 7,
wherein the sensing module (14) further comprises at least one laser (14b) suitable for detecting and tracking a potential dynamic or static obstacle (Obs) in the vicinity of the vehicle (10) and, in case of such a detection, configured to generate and transmit a detection signal to the wheel control module (12),
wherein the processor (12a) of said wheel control module (12) is configured to calculate, on the basis of said received detection signal, new guiding instructions for a new path (Pa') so as to overcome the detected obstacle (Obs) and to reach the ending point (Arr).

9. The system (100) according any one of claims 1 to 8, further comprising an UAV (30) such as a drone comprising :
- a camera (31) associated with image data processing means (32) to detect said vehicle (10),
- a gyroscope (33) suitable for determining the angular position of said UAV (30) regarding the vehicle (10),
- an altimeter (34) to determine the height of the UAV (30) regarding the ground surface of the area (Z), and
- a second positioning sensor (35) such as a GPS suitable for receiving in real time a second GPS signal (s2_GPS) containing coordinates (x2, y2) of the position (P2) of said UAV (30) regarding the ground surface of the area (Z),
wherein said UAV (30) comprises a calculator (36) configured to estimate the coordinates (x1', y1') of the position of the vehicle (10) on the basis of said angular position, said height, and said second GPS signal, and to generate an UAV signal containing said estimated coordinates (x1', y1').

10. The system (100) according to claim 9, wherein the UAV (30) further comprises a radio communication means (37) configured to continuously transmit said UAV signal to the first wireless communication modules (13) of the vehicle (10).

11. The system (100) according to claim 10, wherein the processor (12a) of the wheel control module (12) is configured to continuously compare the estimated coordinates (x1', y1') contained in said UAV signal with the coordinates (x1, y1) provided in the first GPS signal (x1, y1).

12. The system (100) according to claim 11, wherein, if said coordinates (x1, y1) are different from said estimated coordinates (x1', y1'), the processor (12a) of the wheel control module (12) is configured to transmit to the cockpit (20) via the communication modules (13, 23) the order to remotely guide said vehicle (10) using the electronics means (21) of the remote cockpit (20).

13. The system (100) according to claim 11 or 12, wherein, in case of a loss of said first GPS signal (s1_GPS) during a period equal or superior to a predetermined threshold period, the processor (12a) of the wheel control module (12) is configured to take into account the estimated coordinates (x1', y1') provided by the UAV (30) in the guidance of the vehicle (10).

14. Use of a system (100) according to any one of claims 1 to 13 for guiding a motorized vehicle (10) along a predetermined path (Pa) from an starting point (Dep) to an ending point (Arr) within a confined space (Z) inside a port or in a maritime terminal.

15. Use of a system (100) according to any one of claims 1 to 13 for guiding a motorized vehicle (10) along a predetermined path (Pa) from an starting point (Dep) to an ending point (Arr) within a confined space (Z) inside an airport.
